# DEMANDE DE BREVET EUROPEEN

(11) **EP 1 450 457 A1**
(43) Date de publication de la demande: **25.08.2004**
(21) Numéro de dépôt: 04100644.6
(22) Date de dépôt: 18.02.2004
(51) Int. Cl.: H02B 3/00

(54) **Support articule à débattement latéral pour matàriel électrique à haute ou moyenne tension**

(30) Priorité: 21.02.2003 FR 0302167
(71) Demandeur: Areva T&D SA, 92309 Levallois-Perret Cedex (FR)
(72) Inventeur: Chavot, Michel, 73100, Brison-Saint-Innocent (FR); Habert, Jean Louis, 73410, Albens (FR)
(74) Mandataire: Poulin, Gérard

(57) **Abrégé**

La présente invention se rapporte à un support (1) pour matériel électrique à haute ou moyenne tension, comportant quatre montants (4A, 4B, 5A, 5B) posés sur une surface d'appui (6) et reliés deux à deux par des ensemble de traverses. Selon l'invention, lesdits montants sont chacun articulés en rotation autour d'un premier axe horizontal (7A, 7B) à leur extrémité posée sur la surface d'appui et autour d'un second axe horizontal (7C, 7D) sur une traverse supérieure (18) à leur autre extrémité, ces premiers et seconds axes étant parallèles, et deux ensembles de traverses opposés sont agencés pour permettre aux deux montants (4A, 4B; 5A, 5B) reliés par l'un ou l'autre de ces deux ensembles d'avoir un déplacement stable dans leur plan de rotation.

## Description

La présente invention se rapporte à un support articulé à débattement latéral pour matériel électrique à haute ou moyenne tension.

Elle concerne plus précisément un support pour matériel électrique à haute ou moyenne tension, comportant quatre montants posés sur une surface d'appui et reliés deux à deux par quatre ensemble de traverses.

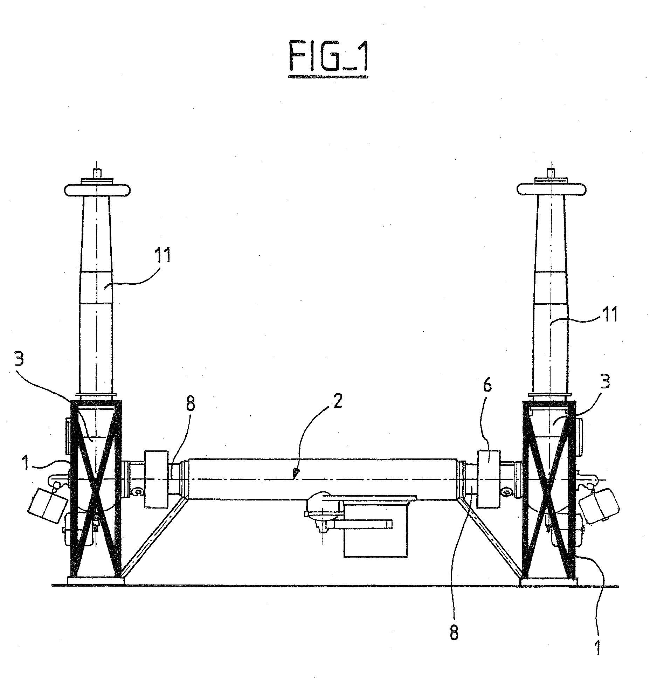

Un tel support est par exemple utilisé dans un ensemble de matériels électriques sous enveloppe métallique dits blindés, tel que représenté sur la figure 1.

Un tel ensemble comprend un disjoncteur blindé 2 horizontal relié à chacune de ses deux extrémités par l'intermédiaire d'un compartiment de liaison 8 à un sectionneur blindé 3. Ce compartiment de liaison 8, portant un transformateur de courant torique 6, est fermé de façon connue par des cônes isolants. Une traversée aérienne 11 est montée au-dessus de chaque sectionneur 3, sectionneurs, traversées et matériels annexes étant portés par un support 1 posé sur le sol.

Dans un tel ensemble connu, chaque support 1 est fixé au sol directement ou indirectement et est constitué de quatre montants sensiblement verticaux reliés deux à deux par quatre ensembles de traverses. Ces ensembles de traverses sont par exemple constitués chacun de deux traverses croisées comme représenté sur la figure 1. Montants et traverses sont reliées de façon rigide.

Or, il pourrait s'avérer nécessaire de démonter rapidement le disjoncteur 2, en cas de dysfonctionnement par exemple, et ceci sans désinstallation des autres matériels que sont les sectionneurs et les traversées aériennes. En particulier, il serait particulièrement avantageux que les sectionneurs et les traversées aériennes puissent rester sous pression de gaz diélectrique et sous tension électrique. Actuellement, ce démontage perturbe fortement l'exploitation du poste électrique dans lequel le matériel représenté sur la figure 1 est installé, car il implique la mise hors tension d'au moins l'une des deux lignes aériennes et le démontage de l'ensemble traversée-sectionneur-charpente situé du côté hors tension, selon un processus complexe, long et délicat.

En particulier, ce processus nécessite généralement la mise en place d'un outillage, de type grue, de support complémentaire et provisoire des lignes aériennes. Il faut permettre à chaque support 1 de ne plus être fixé au sol afin que l'ensemble qu'il supporte puisse être écarté du disjoncteur 2 de l'ordre d'une dizaine de centimètres pour libérer le disjoncteur, tout en empêchant le câble relié à la traversée de provoquer un basculement notable de cet ensemble à cause des efforts de traction importants que ce câble exerce sur la traversée et donc du couple important qui en résulte sur le support. Pour des raisons de sécurité, le support complémentaire et provisoire ne doit pas être mis sous tension électrique, ce qui nécessite la mise hors tension d'au moins la ligne aérienne maintenue par ce support provisoire.

L'invention résout ce problème en proposant un support articulé à débattement latéral permettant de déplacer aisément un matériel électrique à haute ou moyenne tension sans outillage complémentaire, sans nécessité d'efforts physiques conséquents et sans risque de déplacement hors limite qui risquerait de faire basculer notablement le matériel et son support.

Pour résoudre ce problème technique, l'invention propose donc un support pour matériel électrique à haute ou moyenne tension, comportant quatre montants posés sur une surface d'appui et reliés deux à deux par des ensemble de traverses, caractérisé en ce que lesdits montants sont chacun articulés en rotation autour d'un premier axe horizontal à leur extrémité posée sur la surface d'appui et autour d'un second axe horizontal sur une traverse supérieure à leur autre extrémité, ces premiers et seconds axes étant parallèles, et en ce que deux ensembles de traverses opposés sont agencés pour permettre aux deux montants reliés par l'un ou l'autre de ces deux ensembles d'avoir un déplacement stable dans leur plan de rotation.

Le support conforme à l'invention ne comporte pas de pièces séparées devant être démontées, ne nécessite pas d'outillages complémentaires importants et permet sans risque de déplacer un matériel électrique lourd pesant de l'ordre de plusieurs tonnes.

Selon un mode de réalisation préféré, lesdits deux ensembles de traverses opposés comportent chacun deux traverses croisées, dont les extrémités comportent sur les deux montants correspondants une première articulation en rotation autour d'un axe perpendiculaire à l'axe longitudinal de ces montants dit troisième axe.

De préférence, les deux traverses croisées desdits ensembles de traverses opposés comportent chacune un agencement de modification de la distance entre leurs deux premières articulations en rotation.

Selon un premier mode de réalisation, les deux traverses desdits ensembles de traverses opposés sont constituées chacune de deux tronçons de traverse reliés bout à bout par une seconde articulation en rotation autour d'un axe parallèle au dit troisième axe.

Selon un deuxième mode de réalisation, ledit agencement de modification est constitué d'un agencement de liaison permettant le déplacement relatif de la traverse par rapport au montant correspondant à une de ses extrémités.

Dans ce cas, avantageusement, ledit agencement de liaison est constitué d'une fente longitudinale agencée sur la traverse et traversée par ladite première articulation en rotation.

Selon un troisième mode de réalisation, ledit agencement de modification est constitué d'un agencement de réglage de longueur de la traverse.

Dans ce cas, avantageusement, ledit agencement de réglage de longueur de la traverse est de type tendeur à vis.

De préférence, les deux traverses desdits ensembles de traverses opposés sont connectées l'une à l'autre par un agencement de liaison permettant leur déplacement relatif.

Dans ce cas, avantageusement, ledit agencement de liaison est constitué d'une fente longitudinale agencée sur chacune desdites traverses et d'un organe de serrage traversant ces deux fentes.

De façon générale, avantageusement, lesdits deux ensembles de traverses sont symétriques par rapport à un plan de symétrie vertical du support.

L'invention concerne également un ensemble de matériels électriques sous enveloppe métallique dits blindés comportant un premier matériel sensiblement horizontal et au moins à l'une des extrémités de ce premier matériel, un second matériel électrique porté par un support selon l'une des revendications précédentes.
De préférence, ledit premier matériel est un disjoncteur.

L'invention est décrite ci-après plus en détail à l'aide de figures ne représentant que des modes de réalisation préférés de l'invention.

La figure 2 est une vue en perspective d'un support conforme à un premier mode de réalisation de l'invention.

Les figures 3 et 4 sont des vues de face d'un support conforme à ce premier mode de réalisation, avec une partie du matériel électrique représenté en traits pointillés, en position de débattement latéral vers la gauche et vers la droite.

Les figures 5 et 6 sont des vues de face d'un support conforme à un deuxième mode de réalisation, avec une partie du matériel électrique représenté, en position de débattement latéral vers la gauche et vers la droite.
Les figures 7 et 8 sont des vues de face d'un support conforme à un troisième mode de réalisation, avec une partie du matériel électrique représenté, en position de débattement latéral vers la gauche et vers la droite.

Les figures 9 et 10 sont des vues schématiques de face et en perspective détaillée d'une variante de réalisation.

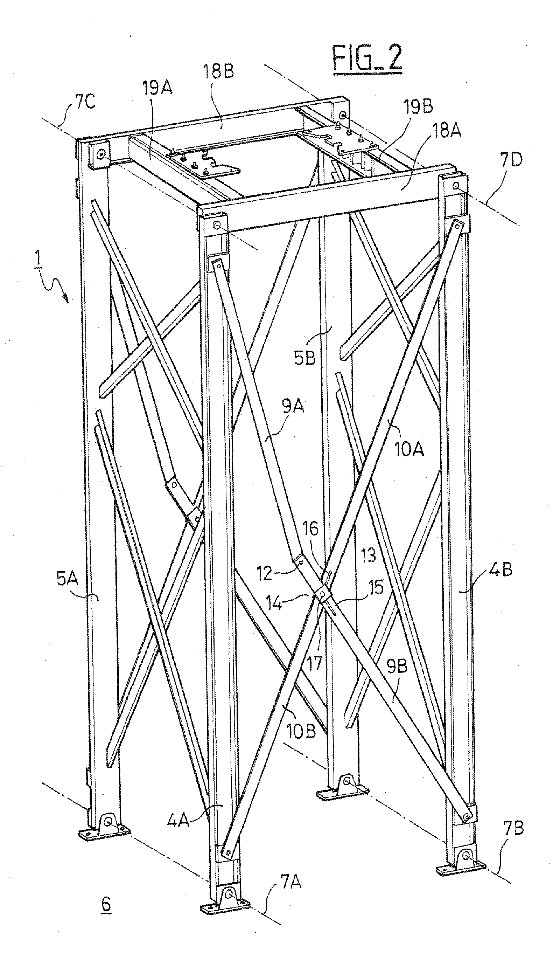

Un premier mode de réalisation de l'invention est décrit sur les figures 2 à 4.

Un support 1 pour matériel à électrique haute ou moyenne tension, comporte quatre montants 4A, 4B, 5A, 5B sensiblement verticaux posés sur une surface d'appui horizontale, par exemple le sol 6.

Les montants 4A, 4B, 5A, 5B sont, à chacune de leurs extrémités posées sur le sol, articulés en rotation autour d'un axe, ces axes 7A, 7B étant horizontaux.

Les montants sont reliés deux à deux par quatre ensembles de traverses, les deux ensembles de traverses latéraux selon la figure 2, étant reliés rigidement aux montants correspondants 4A et 5A, 4B et 5B et constitués chacun de traverses croisées reliées de façon rigide. Un des dits ensembles de traverses latéraux est agencé de façon à ménager un espace suffisant pour permettre le passage d'une extrémité d'une liaison 8 de raccordement à l'élément blindé 3 adjacent, selon l'exemple d'application représenté sur la figure 1.

Les deux autres ensembles de traverses, avant et arrière, sont symétriques selon le plan vertical de symétrie du support et seul l'ensemble avant est ici référencé et décrit dans un souci de simplification.

Cet ensemble disposé entre les deux montants 4A et 4B comporte deux traverses croisées 9 et 10, dont les extrémités sont articulées en rotation autour d'axes horizontaux sur les deux montants correspondants 4A, 4B, et une traverse supérieure horizontale 18A, dont les extrémités sont également articulées en rotation autour d'axes horizontaux 7C, 7D sur les deux montants correspondants 4A, 4B. Chacune de ces traverses croisées est constituée de deux tronçons de traverse 9A et 9B, 10A et 10B reliés bout à bout par une articulation 12, 13 en rotation autour d'un axe horizontal.

Les axes horizontaux d'articulation d'extrémité des traverses 9, 10 sont ici disposées à une première même hauteur pour les extrémités inférieures et à une seconde même hauteur pour les extrémités supérieures.

Disposé sous les articulations 12, 13, un agencement de liaison 14 connecte ensemble les deux traverses 9, 10. Cet agencement de liaison 14 est constitué d'une fente longitudinale 15, 16 agencée sur chacune desdites traverses et d'un organe de serrage 17 traversant ces deux fentes. Cet organe de serrage 17 est de type vis - écrou. Cet agencement de liaison 14 permet le déplacement relatif des traverses 9, 10 sur une plage donnée.

L'ensemble constitué par ces montants 4A, 4B et cette traverse horizontale 18A forme donc un parallélépipède ou un trapèze déformable dont le débattement est limité par ces traverses croisées 9, 10.

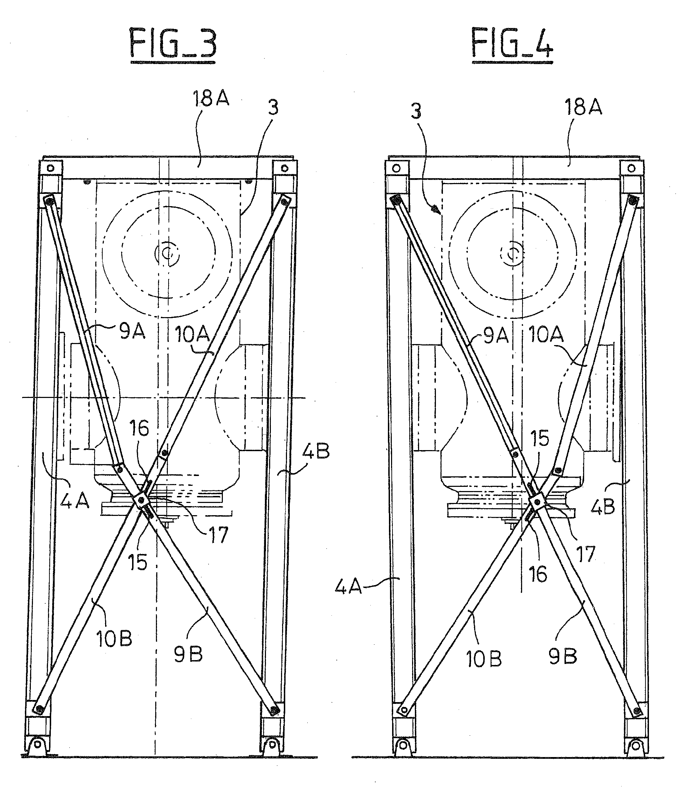

Les figures 3 et 4 représentent les deux positions extrêmes de cet ensemble.

Selon la figure 3, le déplacement est maximal à droite, les tronçons de traverses 10A et 10B étant mis en tension et alignés, l'organe de serrage 17 étant ici en butée contre l'extrémité gauche des fentes 15, 16 des tronçons de traverse 9A, 10A. Selon la figure 4, le déplacement est maximal à gauche, les tronçons de traverses 9A et 9B étant mis en tension et alignés, l'organe de serrage 17 étant ici en butée contre l'extrémité droite des fentes 15, 16 des tronçons de traverse 9A, 10A. De façon plus générale, le déplacement maximal n'est pas défini par la longueur des fentes 15, 16, mais par l'alignement et la mise en tension des deux tronçons d'une des traverses.

Entre ces deux positions extrêmes, on peut donner à l'ensemble de traverses avant toute position intermédiaire, bloquée rigidement par blocage de l'agencement de serrage 14.

L'ensemble de traverses arrière est positionné dans une position symétrique par rapport au plan de symétrie vertical du support à celle de l'ensemble de traverses avant, les deux traverses horizontales 18A, 18B de ces ensembles étant rigidement reliées par au moins une traverse rigide 19, ici deux traverses rigides 19A, 19B.

Dans son application spécifique déjà décrite et représentée sur la figure 1, le support 1 porte un sectionneur 3 représenté en traits pointillés sur les figures 3 et 4 et une traversée aérienne non représentée sur ces figures.

La position extrême représentée sur la figure 3 suppose que l'on veuille détacher le sectionneur 3 d'un matériel électrique, par exemple un disjoncteur blindé 2 comme représenté sur la figure 1, situé sur la droite du support vu selon la figure 3. La position extrême représentée sur la figure 4 suppose que l'on veuille détacher le sectionneur 3 d'un matériel électrique, par exemple un disjoncteur blindé 2 comme représenté sur la figure 1, situé sur la gauche du support vu selon la figure 4.

L'invention permet donc de concevoir un support avec débattement maximal et de l'utiliser avec différents matériels, un débattement inférieur pouvant être ajusté par blocage de l'agencement de serrage 14.

Le blocage du support dans une position de débattement maximal ou intermédiaire est prévu suffisant pour pouvoir résister aux couple important subi par le support et causé par les efforts de traction importants que le câble de ligne exerce sur la traversée aérienne de l'appareillage supporté. Il n'est donc pas nécessaire de prévoir un support complémentaire et provisoire pour les câbles de lignes, ce qui permet de maintenir les lignes sous tension.

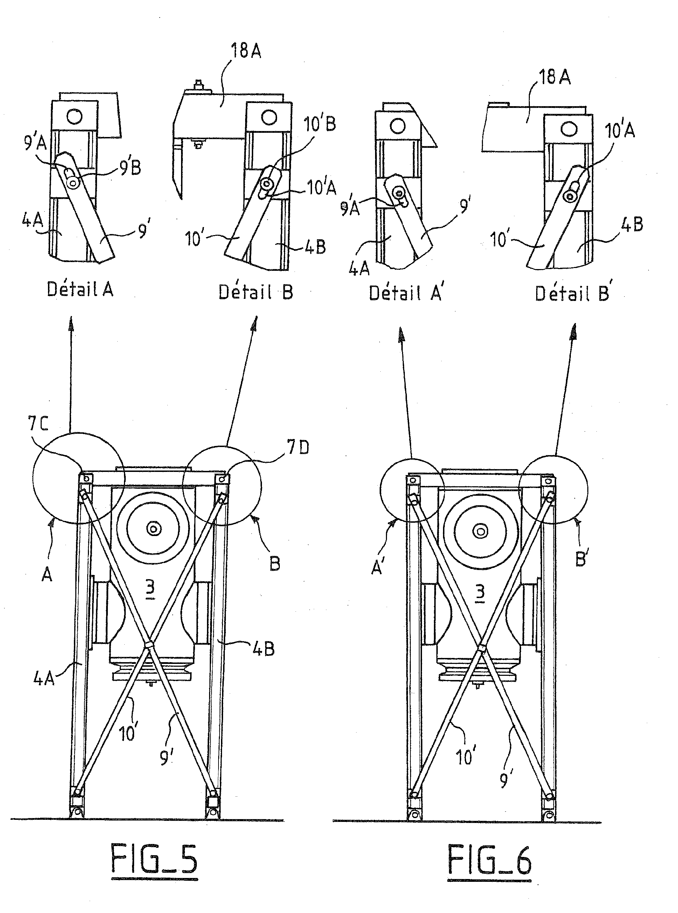

Un deuxième mode de réalisation de l'invention est décrit sur les figures 5 et 6.

Ce deuxième mode de réalisation diffère du mode de réalisation précédent uniquement par la conception des ensembles de traverses opposés qui seront seules décrites ci-après.

Les deux ensembles de traverses, avant et arrière, sont symétriques selon le plan vertical de symétrie du support et seul l'ensemble avant est ici référencé et décrit dans un souci de simplification.

Cet ensemble disposé entre les deux montants 4A et 4B comporte deux traverses croisées 9' et 10' connectées non rigidement l'une à l'autre. Avantageusement, elles sont connectées à leur croisement par un agencement de liaison à fentes de même type que l'agencement de liaison 14 précisément représenté sur la figure 2., Les extrémités des traverses 9' et 10' sont articulées en rotation autour d'axes horizontaux sur les deux montants correspondants 4A, 4B, et une traverse supérieure horizontale 18A a ses extrémités également articulées en rotation autour d'axes horizontaux 7C, 7D sur les deux montants correspondants 4A, 4B.

Chacune des traverses 9' et 10' comporte à son extrémité supérieure un agencement de liaison permettant le déplacement relatif de la traverse en question 9' ou 10' par rapport au montant correspondant 4A ou 4B à cette extrémité. Ces agencements de liaison sont similaires et constitués chacun d'une fente longitudinale 9'A et 10'A agencée à l'extrémité de la traverse correspondante 9', 10' et traversée par l'articulation en rotation de cette extrémité sur le montant correspondant que forme un pivot 9'B, 10'B solidaire du montant correspondant.

Ces agencements de liaison permettant le déplacement relatif des traverses peuvent être agencés aux extrémités supérieures, comme ici représenté, et/ou inférieures des traverses 9', 10'

Selon la figure 5, le déplacement est maximal à droite.Le pivot 10'B du montant droit 4B vient alors en butée contre l'extrémité supérieure de la fente 10'A de la traverse.

Inversement sur la figure 6, le déplacement est maximal à gauche. Le pivot 9'B du montant gauche 4A vient alors en butée contre l'extrémité supérieure de la fente 9'A de la traverse 9'.

L'ensemble de traverses arrière est positionné dans une position symétrique par rapport au plan de symétrie vertical du support à celle de l'ensemble de traverses avant.

Dans son application spécifique déjà décrite et représentée sur la figure 1, le support porte un sectionneur 3 et une traversée aérienne non représentée sur ces figures 5 et 6.

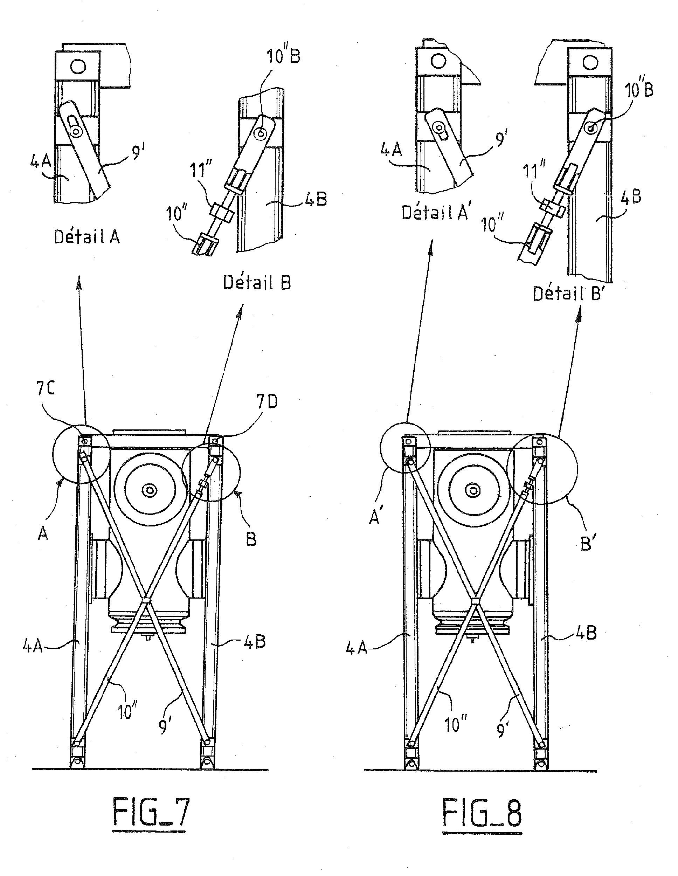

Un troisième mode de réalisation de l'invention est décrit sur les figures 7 et 8.

Ce troisième mode de réalisation diffère des modes de réalisation précédents uniquement par la conception des ensembles de traverses opposés qui seront seules décrites ci-après.

Les deux ensembles de traverses, avant et arrière, sont symétriques selon le plan vertical de symétrie du support et seul l'ensemble avant est ici référencé et décrit dans un souci de simplification.

Cet ensemble disposé entre les deux montants 4A et 4B comporte deux traverses croisées 9' et 10" connectées non rigidement l'une à l'autre. Avantageusement, elles sont connectées à leur croisement par un agencement de liaison à fentes de même type que l'agencement de liaison 14 précisément représenté sur la figure 2. Les extrémités des traverses 9", 10" sont articulées en rotation autour d'axes horizontaux sur les deux montants correspondants 4A, 4B, et une traverse supérieure horizontale 18A a ses extrémités également articulées en rotation autour d'axes horizontaux 7C, 7D sur les deux montants correspondants 4A, 4B.

La traverse 9' comporte à son extrémité supérieure un agencement de liaison permettant le déplacement relatif de la traverse en question 9' ou par rapport au montant correspondant 4A à cette extrémité. Cet agencement de liaison est identique à celui déjà décrit dans le deuxième mode de réalisation et est constitué d'une fente longitudinale 9'A agencée à l'extrémité de la traverse correspondante 9' et traversée par l'articulation en rotation de cette extrémité sur le montant correspondant que forme un pivot 9'B solidaire du montant correspondant traversant cette fente.

La traverse 10" comporte quant à elle un agencement de réglage de longueur de la traverse, de type tendeur à vis 11''.

Selon la figure 7, le déplacement est maximal à droite. Le tendeur 11" est alors réglé en grande longueur.

Inversement sur la figure 8, le déplacement est maximal à gauche. Le tendeur 11" est alors réglé en petite longueur.

L'ensemble de traverses arrière est positionné dans une position symétrique par rapport au plan de symétrie vertical du support à celle de l'ensemble de traverses avant.

Dans son application spécifique déjà décrite et représentée sur la figure 1, le support porte un sectionneur 3 et une traversée aérienne non représentée sur ces figures 7 et 8.

A titre d'exemple, dans le cas de matériels électriques blindés à très haute tension, un support conforme à l'invention peut avoir une hauteur d'environ 2 à 2,5 mètres et permettre un débattement de 100 mm à son sommet, pour des matériels électriques portés pesant plusieurs tonnes.

Dans les modes de réalisation décrits, les montants du support sont sensiblement verticaux et posés sur une surface d'appui horizontale. L'invention s'applique également à de tels supports disposés sur des surfaces d'appui inclinées, comme on peut les utiliser dans les ensembles de matériels électriques. A titre d'exemple, les montants peuvent être inclinés d'un angle d'environ 30° par rapport à la verticale.

Par ailleurs, les montants peuvent être posés sur la surface d'appui directement ou indirectement.

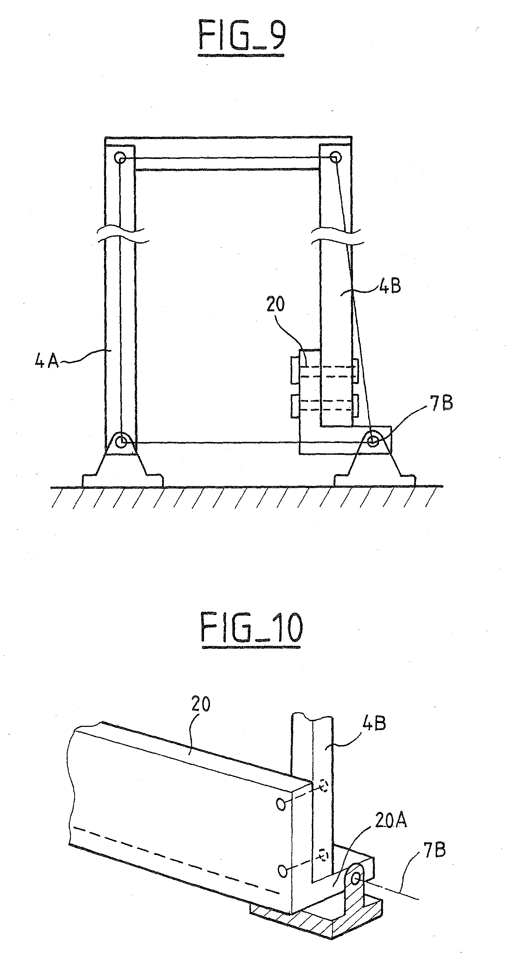

A titre d'exemple, au lieu de relier rigidement les montants avant 4A, 4B avec les montants arrière 5A, 5B par des traverses croisées rigides, comme représenté sur la figure 2, au moins deux de ces traverses croisées peuvent être remplacées par une traverse inférieure 20, comme schématisé sur les figures 9 et 10.

Cette traverse 20 ici horizontale est rigidement fixée à l'extrémité inférieure des montants en soi 4B et 5B. Cette variante a pour avantage de libérer de l'espace entre les montants 4B et 5B, ce qui est intéressant dans l'application spécifique de l'invention aux ensembles de matériels électriques à moyenne ou haute tension. Ceci augmente la liberté de positionnement du compartiment de liaison 8 d'un ensemble tel que représenté sur la figure 1.

De plus, cette traverse 20 présente ici à ses extrémités des brides 20A disposées sous l'extrémité inférieure des montants en soi 4B et 5B. Ce sont ces brides 20A qui sont articulées en rotation autour de l'axe 7B.

Le terme montant utilisé dans la description englobe tout autant un montant constitué d'une seule pièce longiforme telle que précédemment décrite que plusieurs pièces solidaires constituant un montant telles qu'ici le montant en soi 4B et la bride 20A solidaire.

## Revendications

1. Support (1) pour matériel électrique à haute ou moyenne tension, comportant quatre montants (4A, 4B, 5A, 5B) posés sur une surface d'appui (6) et reliés deux à deux par des ensembles de traverses, **caractérisé en ce que** lesdits montants sont chacun articulés en rotation autour d'un premier axe horizontal (7A, 7B) à leur extrémité posée sur la surface d'appui et autour d'un second axe horizontal (7C, 7D) sur une traverse supérieure (18) à leur autre extrémité, ces premiers et seconds axes étant parallèles, et **en ce que** deux ensembles de traverses opposés sont agencés pour permettre aux deux montants (4A, 4B; 5A, 5B) reliés par l'un ou l'autre de ces deux ensembles d'avoir un déplacement stable dans leur plan de rotation.

2. Support selon la revendication 1, **caractérisé en ce que** lesdits deux ensembles de traverses opposés comportent chacun deux traverses croisées (9, 10), dont les extrémités comportent sur les deux montants correspondants (4A, 4B) une première articulation en rotation autour d'un axe, dit troisième axe, perpendiculaire à l'axe longitudinal de ces montants.

3. Support selon la revendication 2, **caractérisé en ce que** les deux traverses croisées desdits ensembles de traverses opposés comportent chacune un agencement de modification de la distance entre leurs deux premières articulations en rotation.

4. Support selon la revendication 3, **caractérisé en ce que**, les deux traverses (9, 10) desdits ensembles de traverses opposés sont constituées chacune de deux tronçons de traverse (9A, 9B, 10A, 10B) reliés bout à bout par une seconde articulation en rotation (12, 13) autour d'un axe parallèle au dit troisième axe.

5. Support selon la revendication 3, **caractérisé en ce que** ledit agencement de modification est constitué d'un agencement de liaison permettant le déplacement relatif de la traverse (9', 10') par rapport au montant (4A, 4B) correspondant à une de ses extrémités.

6. Support selon la revendication 5, **caractérisé en ce que** ledit agencement de liaison est constitué d'une fente longitudinale (9'A, 10'A) agencée sur la traverse (9', 10') et traversée par ladite première articulation en rotation (9'B, 10'B).

7. Support selon la revendication 3, **caractérisé en ce que** ledit agencement de modification est constitué d'un agencement de réglage de longueur de la traverse (10'').

8. Support selon la revendication 7, **caractérisé en ce que** ledit agencement de réglage de longueur de la traverse est de type tendeur à vis (11").

9. support selon l'une des revendications 2 à 8, **caractérisé en ce que** les deux traverses desdits ensembles de traverses opposés sont connectées l'une à l'autre par un agencement de liaison (14) permettant leur déplacement relatif.

10. Support selon la revendication 9, **caractérisé en ce que** ledit agencement de liaison (14) est constitué d'une fente longitudinale (15, 16) agencée sur chacune desdites traverses et d'un organe de serrage (17) traversant ces deux fentes.

11. Support selon l'une des revendications précédentes, **caractérisé en ce que** lesdits deux ensembles de traverses sont symétriques par rapport à un plan de symétrie vertical du support.

12. Ensemble de matériels électriques sous enveloppe métallique dits blindés comportant un premier matériel sensiblement horizontal (2) et au moins à l'une des extrémités de ce premier matériel, un second matériel électrique (3, 11) porté par un support selon l'une des revendications précédentes.

13. Ensemble selon la revendication 12, **caractérisé en ce que** ledit premier matériel est un disjoncteur (2).
